# EUROPEAN PATENT SPECIFICATION

(11) **EP 1 998 291 B1**
(45) Date of publication and mention of the grant of the patent: **19.03.2014**
(21) Application number: 08009704.1
(22) Date of filing: 28.05.2008
(51) Int. Cl.: G06Q 10/06, G07B 17/00, G06Q 50/00

(54) **System and method for control adaptation of carrier infrastructure and process using formal carrier product definition**
System und Verfahren zur Steuerungsanpassung der Trägerinfrastruktur und Verfahren mit einer formalen Trägerproduktdefinition
Système et procédé pour le contrôle et l'adaptation d'une infrastructure de support et procédé utilisant une définition formelle de produit support

(30) Priority: 29.05.2007 US 932134 P; 10.04.2008 US 100443
(43) Date of publication of application: 03.12.2008
(73) Proprietor: Pitney Bowes Inc., Stamford CT 06926-0700 (US)
(72) Inventor: Pintsov, Leon A., West Hartford, CT 06117 (US); Obrea, Andrei, North Miami Beach, FL 33179 (US)
(74) Representative: HOFFMANN EITLE

(56) References cited:
- The technical aspects identified in the present application (Art. 92 EPC) are considered part of common general knowledge. Due to their notoriety no documentary evidence is found to be required. For further details see the accompanying Opinion and the reference below. XP002456252

## Description

This Application claims the benefit of the filing date of U.S. Provisional Application Number 60/932,134 filed May 29, 2007, which is owned by the assignee of the present Application.

This invention relates to mailing systems and more particularly to the creation of new postal products and the modification of existing postal products.

Governments have created postal services for collecting, sorting and distributing the mail. It is difficult for government and private postal services to define and supply new services to the public. The postal service produces and performs operations on a physical item called a mail unit and obtains detailed information about operations and supplying this information to end users i.e., senders and recipients. The postal service or post office communicates product features geared to humans not machines. Humans are inefficient to change, machines more readily accept changes.

Traditional postal product like first class and standard mail can be defined and explained in simple terms and therefore end users do not have problems creating mail for first class and standard mail services. With increased sophistication of postal products and associated requirements effective use of new postal products by mailers is hindered by the lack of automation.

In the current economic and political environment many national posts are in competition with other carriers and are having difficulty meeting their operations budget. Therefore many posts would like to become more profitable and supply additional products and services to their customers.

Thus, one of the problems of the prior art is that many posts want to know what new products and services to supply to their customers. Unfortunately the posts have no way of determining what new products and services to offer.

An additional problem of the prior art is that if the posts knew what new products and services to supply to their customers they had no way of determining whether or not the new products and services may be accomplished using the constraints imposed by the posts current network processes and equipment.

In the environment of embodiments of the invention, the term carrier refers to the environment whereby physical items are inducted, processed, transported and delivered via a distribution network. In this application the terms postal and carrier are used interchangeably and refer to national post offices, couriers delivery services and any entity that delivers mail and/or packages.

Embodiments of the invention overcome the disadvantages of the prior art by creating an automated process that allows the posts to determine what new products and services their customers want and whether or not the new products and services may be accomplished using the constraints imposed by the posts current network processes and equipment.

According to an aspect of the invention there is provided a method for automating the creation of new carrier products or the modification of existing carrier products as set out in Claim 1.

For a better understanding of the invention and to show how the same may be carried into effect, reference will now be made, by way of example, to the accompanying drawings, in which:
Fig. 1 is a system diagram of an embodiment of invention;
Fig. 2 is a diagram of the content and the structure of a carrier product represented as a XML document;
Fig. 3 is a flow chart describing the process utilized by computer 142 of Fig. 1, and
Fig. 4 a flow chart describing how a mail unit receives a product and service that was requested in Fig. 3.

An embodiment of the Invention describes a formal mechanism for defining a broad variety of postal products using measurable attributes. The mechanism for the products then may be formalized into data structures and procedures executable by computer systems.

The postal products from the senders prospective contains physical elements. The physical elements of the mail unit are physical parameters "dimensions, volume, density, material characteristics and content ". Content is restricted for certain services for instance you cannot mail liquids or powders. The physical elements also include the geography of induction, geography of delivery of the mail unit, routing information, i.e., the options for selecting a route between induction and delivery points and timing and frequency of collection and delivery of the mail unit.

The informational elements of the postal product from a sender's perspective include the following: sender directed information about events that occurred during the mail unit processing; sender directed information about other mail units that are directly linked to the mail unit that is being served; sender directed information about objects directly linked to the mail unit being served; customer directed information about other mail communications, sent, received or replied by sender and recipient directed information about the mail unit; and customer service provider negotiated information defining remedies for instances when service could not be delivered as specified.

The sender may also specify rules expressing desired conditions imposed on physical and informational elements.

Regarding informational elements the customer may supply directed information about events in their corresponding attributes that occurred during mail unit processing. Information describing significant changes in values of attributes of the mail unit being served, including information concerning events as deposit, delivery, receipt, impossibility of delivery, mail unit damage or discarding information concerning defects of the mail unit obtained as a result postal processing including such attributes of mail unit as its digital image or digital image of its content.

The standard of evidence required from a sender's perspective may include defining the information security services for presentation of events information to the sender in both physical and electronic format. Evidence of the data origin authentication, data integrity and privacy may also be required.

The following are other examples of events from a senders perspective: depositing of the mal unit; delivery of the mail unit into recipients mailbox; delivery of the mail unit to the recipient; refusal of the mail unit by the recipient; forwarding of the mail unit to another party; diverting and sending the mail unit to another facility; returning the mail unit to the sender; and destroying the mail unit.

Informational elements customer directed information about other mail units that are directly linked to the mail unit that is being served. Information concerning the whereabouts of reply mail units that is mail items sent by the recipient of the given mail unit as a response to receiving it. Customer directed information about other objects directly linked to the mail unit being served. Information about the structure "building, post office box" identified in the destination address, information about intended or actual recipient of the mail unit.

Informational elements. Customer directed information about other mail communications sent, received or replied to by sender or recipient. Information how many directed mail units has been replied to by the recipient identified in the address block. Recipient directed information about the mail unit. Notification about up coming delivery or problems with delivery. Any invaluable to recipient information typically not available to sender at the time of mail unit creation. Customer service provider negotiated information defining remedies when service could not be delivered as specified. Insurance for lost items or refunds for late delivery in similar occurrences and events.

The following is an example of rules from a sender's perspective. If given mail unit cannot be delivered destroy it and send the digital image of the mail unit back to the sender.

If given mail unit cannot be delivered before this date/time, return mail unit and credit mailers account. If given mail unit is located in this facility, do not deliver it but send a digital image of the content and identity of the mail unit to this e-mail address. If given mail item unit is located in this facility after this date, send mail unit to different address. If given mail unit weighs less than the given value, "e.g. 20 grams", send a digital image of the mail unit to the sender or notify the sender by electronically sending the mail unit identifier and the value of the attribute named for instance weight.

The following describes a postal product from a postal operator's perspective. The postal product contains physical elements, informational elements and rules, i.e., access requirements, the mail unit makeup ("data elements, format emplacement"), computerized information to accompany the mailing, its timing, messaging and protocol requirements, grouping and containerization requirements i.e., presort and packaging rules, pricing and payment requirements.

The term "mailer" refers to the mailer or parties acting on behalf of the mailer. Examples of tasks fulfilled by the mailer are: selection and creation of the mail units, printing the mail units, folding, inserting, franking, packing and induction of the mail units. The term "requirements" is derived from business needs and refers to desires or needs of the communicator wants, i.e., delivery time for the communication, proof of delivery, costs, color and material of the mailing envelope and insert and the availability of the color and material of the mailing envelope and insert. The term "constraints" refers to a set of restrictions imposed on the physical composition of the mail units in terms of their attributes (names, values), i.e., location and size of address block, position and encoding scheme for the identifier, Likewise, these may be constraints on sending and receiving information in electronic form to and from other parties, i.e., timing format protocols, etc.

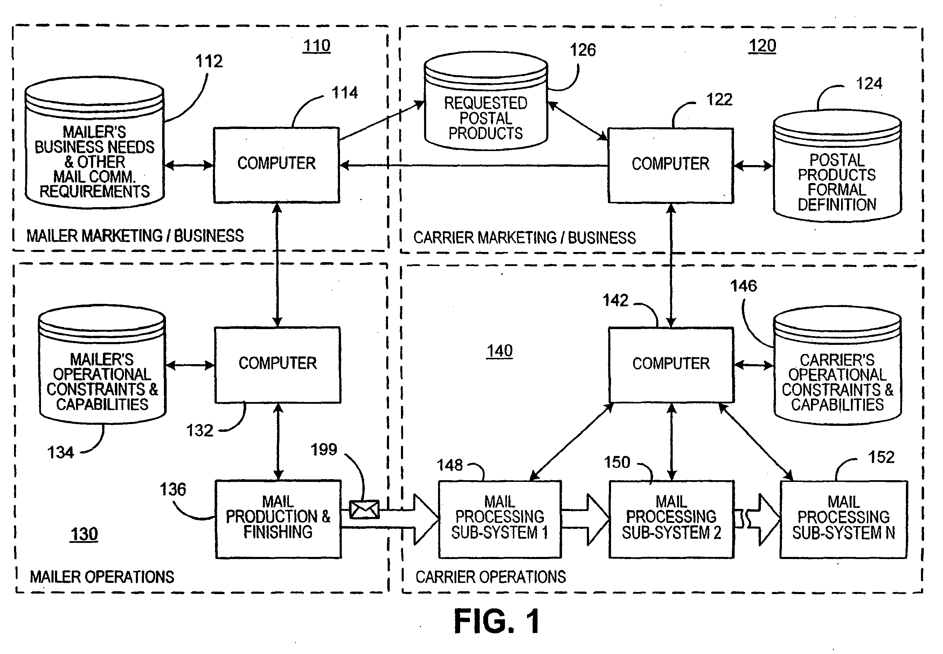

Referring now to the drawings in detail and more particularly to Fig. 1, the reference character 110 represents mailer's marketing and business operations. Mailer's marketing and business operations include mailer's business needs and other mail communications requirements stored in data base 112 that contains formal computer processable information regarding the mailer's needs and other requirements and computer 114 that is coupled to data base 112. Mailer's operations 130 includes mailer's operational constraints and capabilities data base 34, computer 132 and mail production and finishing 136, that may include document and envelope printers, inserters, postage meters, etc. that produce mail unit 199. Computer 132 is coupled to data base 134, mail production and finishing 136 and computer 114. Database 134 contains formal computer processable information regarding the mailer's constraints and capabilities i.e., a set of restrictions imposed on the physical composition of the mail units in terms of their attributes, i.e., location and size of address block, position and encoding scheme for the identifier, color and material of the mailing envelope and insert. Likewise, in database 134 there may be constraints on sending and receiving information in electronic form to and from other parties, i.e., timing format protocols, etc. Mail unit 199 will enter mail processing sub-system 148.

Carrier marketing and business operations 120 includes a database 126 storing information on mailer's requested postal products that do not currently exist but are desired by mailers, a computer 122 that is coupled to data base 126 and a data base 124 that contains a formal description of carrier's products and services i.e., rules pertaining to what mail units may be sent and what they may contain, i.e., delivery time, area of collection and delivery, how sorted, read, print, unbundled, bundle, price, etc. Computer 122 is also coupled to computer 114 and a computer 142 contained in post operations 140.

Post operations 140 also includes a data base 146 of post's operational constraints and capabilities, that is coupled to computer 142, mail processing sub-system 148, mail processing sub-system 150 and mail processing subsystem 152. Mail processing sub-system 148, mail processing sub-system 150 and mail processing subsystem 152 are coupled to computer 142 and contain postal processing equipment, i.e., facer canceller, optical character recognition equipment, sorters, delivery equipment, etc.

The marketing department of a business may desire to enter new desired postal products and services into computer 114 which will be stored in data base 112. Some examples of new desired products and services are as follows. The mailer wants promotional invitations to be delivered to recipients around the country in exactly two days after the promotional mail units were inducted into by the post. The mailer wants the post to process mail units having round envelopes and/or having a particular color. The mailer wants the post to process mail units having art work, i.e., famous paintings printed over a defined portion of the face of the envelope. The mailer wants the post to track a plurality of business reply envelopes from the moment they are inducted by the post and the mailer wants to be notified by e-mail when the post processes the business reply envelopes. When desired by the mailer 130, computer 114 will transmit the mailer desired new products and services stored in data base 112 to data base 126 Computer 122 collects the requests from data base 126 and communicates them to computer 142. Computer 142 communicates with data base 146, which contains a formalized description of the carrier operational constraints and capabilities, and computer 142 then determines whether or not the post may be able to perform the new request.

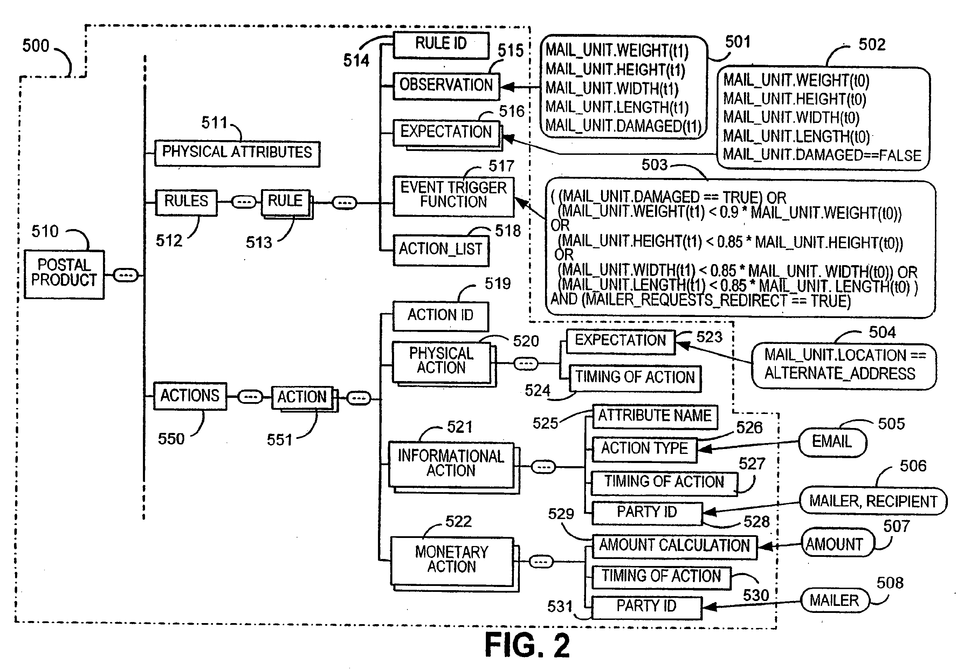

Fig. 2 is a diagram of the content and the structure of a carrier product represented as a XML document. The XML schema that is designed for the product description can serve as a common language of the open innovation process. In this context it is known under the name "Extensible Postal Product Model and Language" (EPPML). The EPPML is a dynamic standard adaptable to emerging requirements for new products and new data exchanges.

Fig. 2 illustrates a fragment of an XML document which is a postal product definition file. In this example, the postal product has an added feature that monitors the size and weight of a mail item and triggers a warning when either of them changes. Such change is considered an indication of possible damage to the mail item. Consider a business mailer that receives merchandise from a supplier in China and then sells it via mail order and ships it using a postal service provider. The mailer notices that as a result of multiple handlings the merchandise (a mail item) sometimes arrives damaged generating undesirable and costly returns processing and multiple unnecessary communications with the intended recipients. The mailer therefore is interested in having the post detect and segregate damaged mail items before delivery to the recipients, redirecting damaged items to the mailer's repair facility. The mailer further wishes that the post, upon detection of the damaged mail item, would notify the recipient and the merchant's repair facility using email. Finally if the damage noted is the result of improper handling by the post the mailer may wish in some instances to receive agreed upon monetary compensation from the post. The post discovers that this mailer' needs are not uncommon and offers a new product intended to meet the requirements of an entire segment of mailers with similar needs. This product is expressed formally using a XML document illustrated in FIG. 2.

In the Fig. 2, t0 denotes the original mailing (induction) time and *t1* some later time at which a damage condition is detected.

Referring to Fig. 2 block 500 represents the structure of the XML document. The structure of the document is described by the elements contained in block 500. The values of the elements are shown outside block 500. Note that the names of the elements in the XML document are constrained by the standard rules that do not allow the use of spaces; as a result, names are sometimes created by concatenating two or more words without spaces between them. The root of the XML document that describes the postal product in our example is PostalProduct 510. Elements at the next level are, in this example, PhysicalAttributes 511 which contains mail item attributes that describe the physical nature and characteristics of the mail item (for example weight, width, length), Rules 512 which contains one or more elements Rule 513. Each Rule 513 contains a RuIeID 514 which is a unique identifier for that rule, one or more Observation 515 which contains a set of values of mail item attributes taken at a given time t. An example of an observation is given in block 501 where the attributes of mail_unit are observed at time t1. The attributes of the mail item identified as mail_unit at time t1 are: weight mail_unit.weight(t1), height mail_unit.height(t1), width mail_unit.width(t1), length mail_unit.lenght(t1) and a boolean attributed labeled damaged mail_unit.damaged(t1).

For example, the following occurrences might be used as indicators that a mail item is damaged: a) 10% or larger change in the weight of the mail item, or b) 13% or larger change in any dimension of the mail item (height, length, or width). Finally, of course, damage can be detected by human operators via visual observation indicating that the mail item appears damaged (punched, defaced, etc.). In each case, the damage causes a detectable change in the value of one or more attributes of the mail item.

The names of the attributes of the mail item that change their value as a result of the handling damage are *weight, height, length, width,* and *damaged* (the last attribute takes two values *true* or false). As long as these attributes indicating "damage condition" can be stated formally, they can be implemented by production rules that are easily programmed in the EPPML. Thus, "damage events" are detectable if significant changes occur in any of the aforementioned mail item attributes. The occurrence of the damage events can be computed by comparing observations and expectations taken at different moments in time. The element expectation 516 has values of mail_unit attributes that for this application are not expected to change (no damage). The expectation is that the values of mail_unit attributes are the same as the initial values, which is at t0, as shown in block 502 which are: weight mail_unit.weight(t0), height mail_unit.height(t0), width mail_unit.width(t0), length mail_unit.lenght(t0) and a boolean attributed labeled damaged mail_unit.damaged(t0).

The main portion of the rule description is the event trigger function EventTriggerFunction 517 that detects the occurrence of the event and the list of actions to be undertaken after the event has occurred and has been detected. While we have focused on "damage events" in this example, it should be clear that other events of relevance to the mailer or the recipient could also be programmed in the same manner. The event trigger function takes as input values of observations (e.g. observation 515) and expectations (e.g. expectation 516). In our example, the EventTriggerFunction 517 contains the following expression shown in block 503, namely: ((mail_unit.damaged == true) or (mait_unit.weight(t1) < 0.9 * mail_unit.weight(t0)) or (mail_unit.height(t1) < 0.85 * mail_unit.height(t0)) or (mail_unit.width(t1) < 0.85 * mail_unit. width(t0)) or (mail_unit.length(t1) < 0.85 * mail_unit. length(t0)) and (mailer_requests_redirect == true).

The element Action_List 518 contains a list of actions to be taken by the post upon detection of an event indicating damage of the mail item. This list typically contains one or more ActionID 519.

Another element of the PostalProduct 510 is Actions 550 which contains one or more elements Action 551. Each Action 551 contains a unique identifier ActionID 519, one or more physical actions PhysicalAction 520, one or more informational actions InformationalAction 521 and one or more monetary actions MonetaryAction 522.

In order to deliver the new "damage reporting product" described above, the post would need an alternate address (i.e. the address of the mailer's repair facility), the desired amount of the compensation (within the limits set up by the post) and email addresses of the mailer and the recipient. These elements must be provided by the mailer in or out-of-bound (i.e. directly on the mail item or electronically). In our example, the action to be taken upon discovery of damage includes delivery at an alternate address provided as a new expectation Expectation 523 which includes the value of the alternate address 504. The physical action also includes an indication regarding the timing of the physical action TimingOfAction 524 which is a moment in time.

Another element of Action 551 is an informational action InformationalAction 521. There could be one or more informational actions. The informational action refers to an attribute whose name is specified by AttributeName 525 and whose value is to be acted upon as a result of Action 551. An informational action can be sending an email, a fax, a SMS, etc. The type of the informational action is specified in ActionType 526. In our example, the post will send an email to both the mailer and the recipient. The values of action type 526 and party ID 528 are shown in 505 and 506. The time of sending an email in our example is specified by the element TimingOfAction 527.

Another element of Action 551 is monetary action MonetaryAction 522. There could be one or more monetary actions. The monetary action 522 in our example takes an amount Amount 507 calculated using a formula AmountCalculation 529 and transfers it to the party identified in PartyID 531 at a time specified by TimingOfAction 530. In our case the PartyID 531 is the mailer 508 who will receive compensation for a damaged mail item.

The above example is intended to convey two basic thoughts. First, an open innovation model for postal products requires a platform and formal language for defining these products.

In the terminology of product innovation, this platform and language make the definition of new products "codifiable". This means that the product can be communicated in a clear and transparent manner between customers and postal service providers and their computers. The second thought conveyed by the example is that designing a platform to assure open innovation is achievable for a broad array of postal products. Thus, the approach here is a viable method for creating descriptions of a broad variety of products that are suitable for both human and computer processing, providing thereby a common language that is a prerequisite for the open product innovation. We name this language EPPML (extensible postal product model and language).

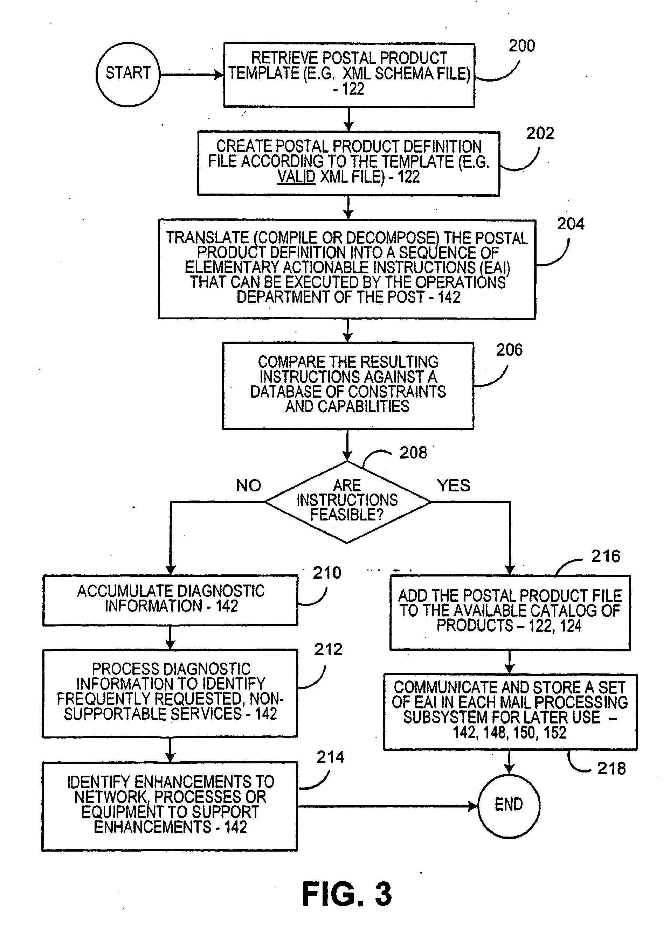

Fig. 3 is a flow chart describing the process utilized by computer 142 of Fig. 1. After the process starts the first step is step 200 where the post retrieves a postal product template, eg. XML schema file. It is customary for an XML schema file to use the extension XSD. We will refer to an XML schema file as an XSD file. The next step in the process is step 202 the creation of a postal product definition file according to the template, i.e., a valid XML file. Step 202 is driven by: the business needs of the post as set forth in data base 124 (Fig. 1). Data base 124 stores requests from mailers for specific products stored in data base 126 submitted to the post according to the postal product definition schema stored in computer 122 and data base 124. Next step 204 translates (compile or decompose) the postal product definition into a sequence of elementary actionable instructions (EAI) that can be executed by the operations department of the post.

The post operations department maintains a database 146 of posts capabilities and constraints that is retrieved by computer 142. Examples of constraints on both mail unit and postal processing subsystems are: limitations of barcode readability, limitation of transit time, pickup and delivery areas and time-of-day and thickness of an envelope for automated sorters. Examples of such elementary instructions are: identify the postal product requested for given mail unit; retrieve mail unit identity; read barcode (symbology, location), read radio frequency identification device (RFID), read handwritten text; measure mail unit dimensions, weight, color; retrieve the content of the Destination Address Block of the mail unit; modify the destination address information; transport mail unit; print identifier on mail unit (on the face/back, content, symbology, location); accept mail unit; deliver mail unit; sort mail unit; communicate exceptions, tracking information, issue refunds, extra charges; verify that the resulting instructions are feasible by comparing them against the database of constraints and capabilities; if successful, store validated XML file which represents the postal product; if failure, report the diagnostic information (inability of the network, process or equipment to perform requested EAI). The EAI is also communicated and stored in each mail processing subsystem for later use, i.e., computer 142 (Fig. 1), and sub-systems 148, 150, and 152

At this point step 206 compares the resulting instructions against data base 146 (Fig. 1) constraints and capabilities, i.e., can the post process round envelopes. The next step in the process is step 208. Step 208 determines whether or not the instructions are feasible. If step 208 determines that the instructions are not feasible the next step is step 210. Step 210 accumulates diagnostic information in computer 142. Next step 212 processes the diagnostic information to identify frequently requested, non-supportable services and stores the result in computer 142. Then step 214 identifies the enhancements to the network, processes or equipment to support the enhancements. In other words step 214 informs the post of changes that may be made to their sub-systems to make new products and services possible.

If step 208 determines that the instructions are feasible the next step is step 216. Step 216 adds the postal product file to the available catalog of products controlled by computer 122 and stored in data base 124. Then step 218 communicates and stores a set of EAI in computer 142 and in mail processing sub-systems 148, 150 and 152 for later use. After completing step 214 or step 218 the process ends.

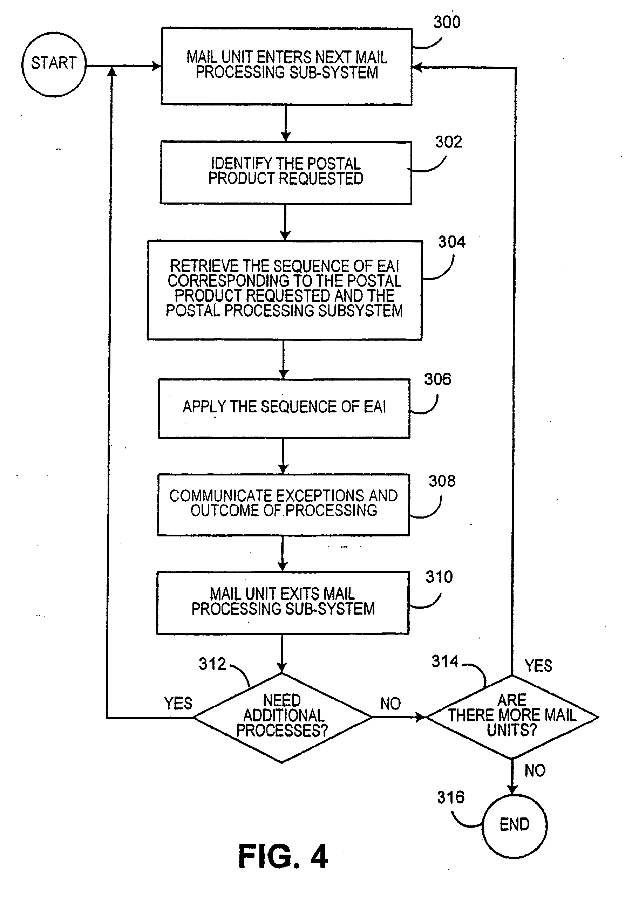

Fig. 4 is a flow chart describing the processing of a mail unit in the carrier operations 140 in accordance with the elementary actionable instructions (EAI) identified in Fig. 3 for the carrier product identified on the mail unit 199. After the process starts the first step is step 300, where the mail unit enters the next mail processing sub-system. The next step is step 302, where the identity of the postal product is requested. At this point the process goes to step 304. Step 304 retrieves the sequence of EAI corresponding to the postal product requested and the postal processing subsystem. Then in step 306 the process applies the sequence of EAI. Now in step 308, the process communicates exceptions and the outcome of processing. The next step is step 310 where the mail unit exits the mail processing subsystem. The next step in the process is step 312. Step 312 determines whether or not any additional processes are needed. If step 312 determines that additional processes are needed the process goes back to step 300. If step 312 determines that additional processes are not need the process goes to step 314. Step 314 determines whether or not there are more mail units. If step 314 determines that there are more mail units the process goes back to step 300. If step 314 determines that there are no more mail units the process ends in step 316.

The above specification describes a new and improved method for automating the creation of new postal products and the modification of existing postal products. It is realized that the above description may indicate to those skilled in the art additional ways in which the principals of this invention may be used. Therefore, it is intended that this invention be limited only by the scope of the appended claims.

## Claims

1. A method for creating new carrier products or the modification of existing carrier products, said method comprising the steps of:
obtaining (200) by a computer a description (124) of requirements for new carrier products and a description (146) of available carrier operational constraints and capabilities in computer processable format;
translating (204) the requirements for the new carrier products into a sequence of computer actionable instructions that may be exercisable by carrier operations (140); and
comparing (206) by the computer (122,142) the sequence of actionable instructions and the carrier operational constraints and capabilities (146) to determine feasibility of the requirements;
wherein the description of requirements for new carrier products is obtained in a computer processable format comprising a XML document (500) which describes a carrier product using elements, the elements comprising a physical attributes element (511) and a rules element (512-518), wherein:
the physical attributes element (511) contains mail item attributes that describe the physical nature and characteristics of a mail item; and
the rules element (512-518) contains one or more observation elements (515) which contains a set of values of mail item attributes taken at a given time, one or more expectation elements (516) having expected values of mail item attributes, an event trigger function element (517) that defines the criteria for the detection of the occurrence of an event taking as input values of observations and expectations, and an action list element (518) containing a list of actions to be taken upon detection of an event;
and wherein the method further comprises:
adding (216) a description of the new carrier product to available carrier products if feasible.

2. The method claimed in Claim 1, wherein the method further comprises:
communicating and storing the sequence of computer executable instructions in mail processing sub-systems for later use; and
processing a mail unit in accordance with the computer actionable instructions for a carrier product identified on the mail unit by:
identifying (302) a postal product requested for a mail unit in a mail processing sub-system;
retrieving the sequence of computer actionable instructions corresponding to the postal product requested and the mail processing sub-system; and
applying the sequence of computer actionable instructions.

3. The method claimed in Claim 2 wherein:
the rules element (512-518) contains one or more observation elements (515) which contains a set of values of mail item attributes comprising weight, height, length, width and whether the mail item is damaged taken at a given time, one or more expectation elements (516) having values of mail item attributes that are not expected to change comprising weight, height, length, width and whether the mail item is damaged, an event trigger function element (517) that defines the criteria for the detection of the occurrence of a damage event taking as input and comparing the values of observations and expectations, and an action list element (518) containing a list of actions to be taken upon detection of an event; and
the sequence of computer actionable instructions is applied to determine if the mail unit has been damaged.

4. The method claimed in Claim 1, Claim 2 or Claim 3, wherein the elements of the XML document (500) further comprise an actions element (550, 551, 519-531) containing one or more physical actions elements (520), one or more informational actions elements (521) and one or more monetary actions elements (522).

5. The method claimed in any preceding claim, wherein the computer description of requirements is a computer description (112) of mailer requirements.

6. The method claimed in any preceding claim, further including the step of:
identifying (212) the carrier operational constraints and capabilities (146) that render the requirements for new carrier products not feasible,
identifying (214) enhancements to the carrier operations that remove the carrier operational constraints; and
implementing the carrier operations enhancements.

7. The method claimed in Claim 1, wherein the computer description of requirements is a computer description of carrier requirements.

8. The method claimed in Claim 7, further including the step of:
identifying the carrier operational constraints and capabilities (146) that render the requirements for new carrier products not feasible,
Identifying (214) enhancements to the carrier operations that remove the carrier operational constraints; and
implementing (216) the carrier operations enhancements.

9. The method claimed in Claim 1, wherein the computer description of requirements is a combination of the computer description of mailer and carrier requirements.

10. The method claimed in Claim 9, further including the step of:
identifying (212) the carrier operational constraints and capabilities (146) that render the requirements for new carrier products not feasible,
identifying (214) enhancements to the carrier operations that remove the carrier operational constraints; and
implementing the carrier operations enhancements.

## Patentansprüche

1. Verfahren zur Schaffung neuer Carrier-Produkte oder zur Modifikation von vorhandenen Carrier-Produkten, wobei das Verfahren die folgenden Schritte umfasst:
Erhalten (200) einer Beschreibung (124) von Anforderungen für neue Carrier-Produkte und einer Beschreibung (146) von verfügbaren betrieblichen Einschränkungen und Fähigkeiten eines Carriers in einem von einem Computer verarbeitbaren Format durch einen Computer;
Übersetzen (204) der Anforderungen für neue Carrier-Produkte in eine Folge von durch einen Computer umsetzbaren Anweisungen, welche durch die Betriebstätigkeit des Carriers (140) ausführbar sein können; und
Vergleichen (206) der Folge von umsetzbaren Anweisungen und der betrieblichen Einschränkungen und Fähigkeiten des Carriers (146) durch den Computer (122, 142), um die Realisierbarkeit der Anforderungen zu bestimmen;
wobei die Beschreibung von Anforderungen für neue Carrier-Produkte in einem von einem Computer verarbeitbaren Format erhalten wird, das ein XML-Dokument (500) umfasst, welches ein Carrier-Produkt unter Verwendung von Elementen beschreibt, wobei die Elemente ein Physikalische-Attribute-Element (511) und ein Regeln-Element (512-518) umfassen, wobei:
das Physikalische-Attribute-Element (511) Poststück-Attribute enthält, welche die physikalische Natur und Merkmale eines Poststücks beschreiben; und
das Regeln-Element (512-518) enthält: ein oder mehrere Beobachtungselemente (515), welche eine Menge von Werten von Poststück-Attributen enthalten, die zu einem gegebenen Zeitpunkt bestimmt wurden, ein oder mehrere Erwartungselemente (516) mit erwarteten Werten von Poststück-Attributen, ein Ereignisauslösungs-Funktionselement (517), welches die Kriterien für die Detektion des Eintretens eines Ereignisses definiert, wobei Werte von Beobachtungen und Erwartungen als Eingang verwendet werden, und ein Aktionslistenelement (518), das eine Liste von Aktionen enthält, die bei Detektion eines Ereignisses auszuführen sind;
und wobei das Verfahren ferner umfasst:
Hinzufügen (216) einer Beschreibung des neuen Carrier-Produkts zu verfügbaren Carrier-Produkten, falls es realisierbar ist.

2. Verfahren nach Anspruch 1, wobei das Verfahren ferner umfasst:
Kommunizieren und Speichern der Folge von durch einen Computer ausführbaren Anweisungen in Postverarbeitungs-Teilsystemen für eine spätere Verwendung; und
Bearbeiten eines Poststücks entsprechend den durch einen Computer umsetzbaren Anweisungen für ein Carrier-Produkt, das auf dem Poststück angegeben ist, durch:
Identifizieren (302) eines für ein Poststück angeforderten Postprodukts in einem Postverarbeitungs-Teilsystem;
Abrufen der Folge von durch einen Computer umsetzbaren Anweisungen, die dem angeforderten Postprodukt und dem Postverarbeitungs-Teilsystem entspricht; und
Anwenden der Folge von durch einen Computer umsetzbaren Anweisungen.

3. Verfahren nach Anspruch 2, wobei:
das Regeln-Element (512-518) enthält: ein oder mehrere Beobachtungselemente (515), welche eine Menge von Werten von Poststück-Attributen enthalten, welche Gewicht, Höhe, Länge, Breite, und ob das Poststück beschädigt ist, umfassen, die zu einem gegebenen Zeitpunkt bestimmt wurden, ein oder mehrere Erwartungselemente (516) mit Werten von Poststück-Attributen, bei denen nicht erwartet wird, dass sie sich ändern, und welche Gewicht, Höhe, Länge, Breite, und ob das Poststück beschädigt ist, umfassen, ein Ereignisauslösungs-Funktionselement (517), welches die Kriterien für die Detektion des Eintretens eines Beschädigungsereignisses definiert, wobei die Werte von Beobachtungen und Erwartungen als Eingang verwendet und verglichen werden, und ein Aktionslistenelement (518), das eine Liste von Aktionen enthält, die bei Detektion eines Ereignisses auszuführen sind; und
die Folge von durch einen Computer umsetzbaren Anweisungen angewendet wird, um zu bestimmen, ob das Poststück beschädigt worden ist.

4. Verfahren nach Anspruch 1, Anspruch 2 oder Anspruch 3, wobei die Elemente des XML-Dokuments (500) ferner ein Aktionselement (550, 551, 519-531) umfassen, das ein oder mehrere Physikalische-Aktionen-Elemente (520), ein oder mehrere Informationelle-Aktionen-Elemente (521) und ein oder mehrere Monetäre-Aktionen-Elemente (522) enthält.

5. Verfahren nach einem der vorhergehenden Ansprüche, wobei die Computerbeschreibung von Anforderungen eine Computerbeschreibung (112) von Versenderanforderungen ist.

6. Verfahren nach einem der vorhergehenden Ansprüche, welches ferner die folgenden Schritte beinhaltet:
Identifizieren (212) der betrieblichen Einschränkungen und Fähigkeiten des Carriers (146), welche bewirken, dass die Anforderungen für neue Carrier-Produkte nicht realisierbar sind,
Identifizieren (214) von Verbesserungen bezüglich der Betriebstätigkeit des Carriers, welche die betrieblichen Einschränkungen des Carriers beseitigen; und
Implementieren der Verbesserungen der Betriebstätigkeit des Carriers.

7. Verfahren nach Anspruch 1, wobei die Computerbeschreibung von Anforderungen eine Computerbeschreibung von Carrier-Anforderungen ist.

8. Verfahren nach Anspruch 7, welches ferner die folgenden Schritte beinhaltet:
Identifizieren der betrieblichen Einschränkungen und Fähigkeiten des Carriers (146), welche bewirken, dass die Anforderungen für neue Carrier-Produkte nicht realisierbar sind,
Identifizieren (214) von Verbesserungen bezüglich der Betriebstätigkeit des Carriers, welche die betrieblichen Einschränkungen des Carriers beseitigen; und
Implementieren (216) der Verbesserungen der Betriebstätigkeit des Carriers.

9. Verfahren nach Anspruch 1, wobei die Computerbeschreibung von Anforderungen eine Kombination der Computerbeschreibung von Versender- und Carrier-Anforderungen ist.

10. Verfahren nach Anspruch 9, welches ferner die folgenden Schritte beinhaltet:
Identifizieren (212) der betrieblichen Einschränkungen und Fähigkeiten des Carriers (146), welche bewirken, dass die Anforderungen für neue Carrier-Produkte nicht realisierbar sind,
Identifizieren (214) von Verbesserungen bezüglich der Betriebstätigkeit des Carriers, welche die betrieblichen Einschränkungen des Carriers beseitigen; und
Implementieren der Verbesserungen der Betriebstätigkeit des Carriers.

## Revendications

1. Procédé pour créer de nouveaux produits de transporteurs ou pour la modification de produits de transporteurs existants, ledit procédé comprenant les étapes consistant à :
obtenir (200), au moyen d'un ordinateur, une description (124) d'exigences pour de nouveaux produits de transporteurs et une description (146) de contraintes et capacités opérationnelles de transporteurs existantes sous un format pouvant être traité informatiquement ;
traduire (204) les exigences pour les nouveaux produits de transporteurs en une séquence d'instructions pouvant être mises en oeuvre par ordinateur, séquence qui peut être appliquée par les opérations de transporteurs (140) ; et
comparer (206), au moyen de l'ordinateur (122, 142), la séquence d'instructions pouvant être mises en oeuvre et les contraintes et capacités opérationnelles de transporteurs (146) pour déterminer la faisabilité des exigences ;
la description des exigences pour de nouveaux produits de transporteurs étant obtenue sous un format pouvant être traité informatiquement comprenant un document XML (500) qui décrit un produit de transporteur utilisant des éléments, les éléments comprenant un élément attributs physiques (511) et un élément règles (512-518) :
l'élément attributs physiques (511) contenant des attributs d'article de courrier qui décrivent la nature physique et les caractéristiques d'un article de courrier ; et
l'élément règles (512-518) contient un ou plusieurs éléments d'observation (515) qui contiennent un ensemble de valeurs d'attributs d'article de courrier prises à un moment donné, un ou plusieurs éléments d'attentes (516) comportant des valeurs attendues d'attributs d'article de courrier, un élément fonction de déclenchement d'événement (517) qui définit les critères pour la détection de la survenue d'un événement en prenant comme entrée des valeurs d'observations et d'attentes, et un élément liste d'actions (518) contenant une liste d'actions à réaliser lors de la détection d'un événement ;
et ledit procédé comprenant, en outre :
l'ajout (216) d'une description du nouveau produit de transporteur à des produits de transporteurs existants si cela est faisable.

2. Procédé selon la revendication 1, ledit procédé comprenant, en outre, les étapes consistant à :
communiquer et stocker la séquence d'instructions pouvant être exécutées par ordinateur dans des sous-systèmes de traitement de courrier pour usage ultérieur ; et
traiter une unité de courrier en fonction des instructions pouvant être mises en oeuvre par ordinateur pour un produit de transporteur identifié sur l'unité de courrier par le fait :
d'identifier (302) un produit postal demandé pour une unité de courrier dans un sous-système de traitement de courrier ;
extraire la séquence d'instructions pouvant être mises en oeuvre par ordinateur correspondant au produit postal demandé et au sous-système de traitement de courrier ; et
appliquer la séquence d'instructions pouvant être mises en oeuvre par ordinateur.

3. Procédé selon la revendication 2, dans lequel :
l'élément règles (512-518) contient un ou plusieurs éléments d'observation (515) qui contiennent un ensemble de valeurs d'attributs d'article de courrier comprenant le poids, la hauteur, la longueur, la largeur et la détérioration éventuelle de l'article de courrier, prises à un moment donné, un ou plusieurs éléments d'attentes (516) comportant des valeurs d'attributs d'article de courrier qui ne sont pas attendus comme changeant, comprenant le poids, la hauteur, la longueur, la largeur et la détérioration éventuelle de l'article de courrier, un élément fonction de déclenchement d'événement (517) qui définit les critères pour la détection de la survenue d'un événement de détérioration en prenant comme entrée, et en les comparant, les valeurs d'observations et d'attentes, et un élément liste d'actions (518) contenant une liste d'actions à réaliser lors de la détection d'un événement ; et
la séquence d'instructions pouvant être mises en oeuvre par ordinateur étant appliquée pour déterminer si l'unité de courrier a été détériorée.

4. Procédé selon la revendication 1, la revendication 2 ou la revendication 3, dans lequel les éléments du document XML (500) comprennent, en outre, un élément actions (550, 551, 519-531) contenant un ou plusieurs éléments actions physiques (520), un ou plusieurs éléments actions d'informations (521) et un ou plusieurs éléments actions monétaires (522).

5. Procédé selon l'une quelconque des revendications précédentes, dans lequel la description, par ordinateur, d'exigences est une description informatique (112) d'exigences d'expéditeurs.

6. Procédé selon l'une quelconque des revendications précédentes, comprenant, en outre, les étapes consistant à :
identifier (212) les contraintes et capacités opérationnelles de transporteurs (146) qui rendent infaisables les exigences pour de nouveaux produits de transporteurs,
identifier (214) des améliorations à apporter aux opérations de transporteurs qui suppriment les contraintes opérationnelles de transporteurs ; et
mettre en oeuvre les améliorations des opérations de transporteurs.

7. Procédé selon la revendication 1, dans lequel la description informatique d'exigences est une description informatique d'exigences de transporteurs.

8. Procédé selon la revendication 7, comprenant, en outre, les étapes consistant à :
identifier les contraintes et capacités opérationnelles de transporteurs (146) qui rendent infaisables les exigences pour de nouveaux produits de transporteurs,
identifier (214) des améliorations à apporter aux opérations de transporteurs qui suppriment les contraintes opérationnelles de transporteurs ; et
mettre en oeuvre (216) les améliorations des opérations de transporteurs.

9. Procédé selon la revendication 1, dans lequel la description informatique d'exigences est une combinaison de la description informatique d'exigences d'expéditeurs et de transporteurs.

10. Procédé selon la revendication 9, comprenant, en outre, les étapes consistant à :
identifier (212) les contraintes et capacités opérationnelles de transporteurs (146) qui rendent infaisables les exigences pour de nouveaux produits de transporteurs,
identifier (214) des améliorations à apporter aux opérations de transporteurs qui suppriment les contraintes opérationnelles de transporteurs ; et
mettre en oeuvre les améliorations des opérations de transporteurs.
